# EUROPÄISCHE PATENTANMELDUNG

(11) **EP 1 967 362 A2**
(43) Veröffentlichungstag der Anmeldung: **10.09.2008**
(21) Anmeldenummer: 08003952.2
(22) Anmeldetag: 04.02.2008
(51) Int. Cl.: B41F 13/42, B41F 33/00, B41F 7/10

(54) **Druckeinheit einer Rollendruckmaschine**

(30) Priorität: 06.03.2007 DE 102007010762
(71) Anmelder: manroland AG, 63075 Offenbach (DE)
(72) Erfinder: Käser, Wolfgang, 86690 Mertingen (DE)
(74) Vertreter: Ulrich, Thomas

(57) **Zusammenfassung**

Die Erfindung betrifft eine Druckeinheit einer Rollendruckmaschine, mit mehreren Druckwerken (11, 12, 13, 14), wobei jedes Druckwerk einen Formzylinder (15), einen Übertragungszylinder (16), ein Farbwerk (17) sowie gegebenenfalls ein Feuchtwerk (18) umfasst, und wobei jeweils zwei vertikal übereinander angeordnete Druckwerke(11, 13; 12, 14) eine Druckwerkgruppe bilden. Erfindungsgemäß ist jeweils zwei übereinander angeordneten Druckwerken (11, 13; 12, 14), die eine Druckwerkgruppe bilden, jeweils eine gemeinsame Schutzvorrichtung (20) zugeordnet, um Gefahrenbereiche an der jeweiligen Druckwerkgruppe abzudecken, wobei die einer Druckwerkgruppe zugeordnete Schutzvorrichtung (20) zumindest abschnittsweise translatorisch verlagerbar ist, um einen Zugang zu Druckwerken (11, 13; 12, 14) der Druckwerkgruppe freizugeben oder zu versperren.

## Beschreibung

Die Erfindung betrifft eine Druckeinheit einer Rollendruckmaschine gemäß dem Oberbegriff des Anspruchs 1.

Aus der Praxis bekannte Druckeinheiten von Rollendruckmaschinen verfügen über mehrere Druckwerke, wobei jedes Druckwerk einen Übertragungszylinder, einen Formzylinder, ein Farbwerk sowie gegebenenfalls ein Feuchtwerk aufweist. Die Formzylinder werden auch als Plattenzylinder und die Übertragungszylinder als Gummizylinder bezeichnet. Weiterhin können solche Druckeinheiten Gegendruckzylinder aufweisen, wobei ein Gegendruckzylinder mit einem oder mehreren Übertragungszylindern unterschiedlicher Druckwerke zusammenwirken kann. Die Gegendruckzylinder werden auch als Satellitenzylinder bezeichnet, weshalb Druckeinheiten mit mindestens einem Gegendruckzylinder auch als Satellitendruckeinheiten bezeichnet werden. Neben Satellitendruckeinheiten, die Gegendruckzylinder aufweisen, sind auch Druckeinheiten bekannt, die keine Gegendruckzylinder aufweisen, wobei bei Druckeinheiten ohne Gegendruckzylinder die Übertragungszylinder zweier Druckwerke aufeinander abrollen.

Aus der DE 196 42 561 C5 ist eine Druckeinheit einer Rollendruckmaschine bekannt, wobei jedem Druckwerk der Druckeinheit eine separate Schutzabdeckung zugeordnet ist, um Gefahrenbereiche an dem jeweiligen Druckwerk abzudecken und so den Zugang zu dem jeweiligen Druckwerk zu versperren. Um z. B. zur Ausführung von Wartungsarbeiten den Zugang zu einem Druckwerk freizugeben, ist nach diesem Stand der Technik die jeweilige Schutzabdeckung um eine Schwenkachse schwenkbar. Das Zuordnen von individuellen Schutzabdeckungen für jedes Druckwerk einer Druckeinheit ist konstruktiv aufwendig und teuer. Schwenkbare Schutzabdeckungen benötigen darüber hinaus relativ viel Bauraum.

Hiervon ausgehend liegt der vorliegenden Erfindung das Problem zugrunde, eine neuartige Druckeinheit einer Rollendruckmaschine zu schaffen.

Dieses Problem wird durch eine Druckeinheit einer Rollendruckmaschine gemäß Patentanspruch 1 gelöst.

Erfindungsgemäß ist jeweils zwei übereinander angeordneten Druckwerken, die eine Druckwerkgruppe bilden, jeweils eine gemeinsame Schutzvorrichtung zugeordnet, um Gefahrenbereiche an der jeweiligen Druckwerkgruppe abzudecken, wobei die einer Druckwerkgruppe zugeordnete Schutzvorrichtung zumindest abschnittsweise translatorisch verlagerbar ist, um einen Zugang zu der Druckwerkgruppe freizugeben oder zu versperren.

Bei der erfindungsgemäßen Druckeinheit ist jeweils zwei vertikal übereinander angeordneten Druckwerken, die eine Druckwerkgruppe bilden, eine gemeinsame Schutzvorrichtung zugeordnet, die zumindest abschnittsweise translatorisch verlagerbar ist, um den Zugang zu den Druckwerken der Druckwerkgruppe freizugeben oder zu versperren. Mit der hier vorliegenden Erfindung kann die Anzahl der benötigten Schutzvorrichtungen reduziert werden. Dies ist aus Kostengründen von Vorteil. Weiterhin benötigen translatorisch verlagerbare Schutzvorrichtungen weniger Bauraum als die aus dem Stand der Technik bekannten, verschwenkbaren Schutzvorrichtungen.

Vorzugsweise wiest die einer Druckwerkgruppe zugeordnete Schutzvorrichtung mehrere plattenartige Segmente auf, wobei die plattenartigen Segmente senkrecht zur einer Flächennormalen derselben teleskopartig in vertikaler Richtung zueinander verlagerbar sind.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1:: eine erfindungsgemäße Druckeinheit einer Rollendruckmaschine in Seitenansicht; und
- Fig. 2:: die Druckeinheit der Fig. 1 in Vorderansicht.

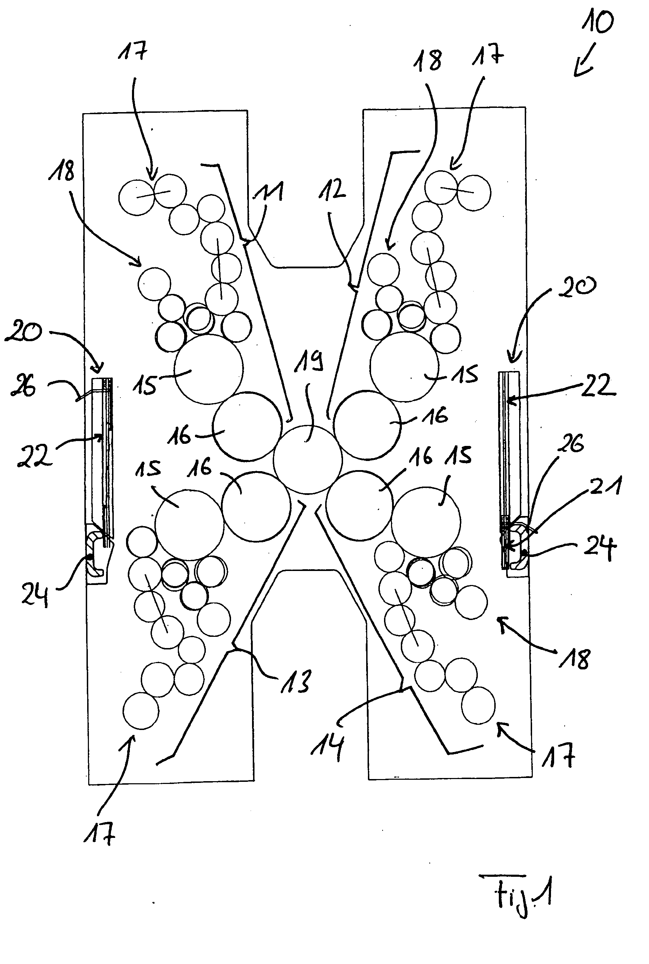

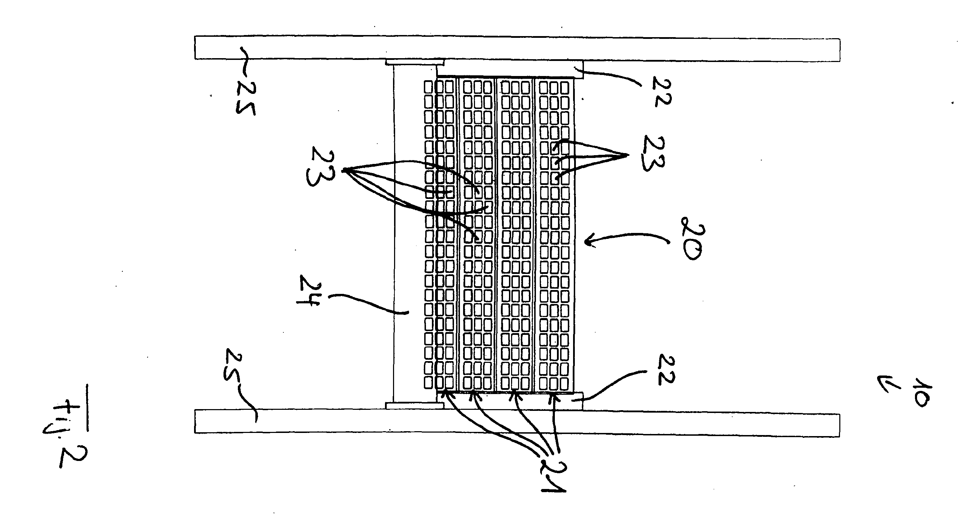

Fig. 1 und 2 zeigen unterschiedliche Ansichten einer erfindungsgemäßen Druckeinheit 10 einer Rollenrotationsdruckmaschine, wobei die Druckeinheit 10 gemäß Fig. 1 vier Druckwerke 11, 12, 13 und 14 umfasst. Jedes der Druckwerke 11 bis 14 umfasst einen Formzylinder 15, einen Übertragungszylinder 16, ein Farbwerk 17 sowie ein Feuchtwerk 18, wobei die Übertragungszylinder 16 aller Druckwerke 11 bis 14 auf einem Satellitenzylinder 19 abrollen. Die Druckeinheit 10 der Fig. 1 ist demnach als 9-Zylinder-Satellitendruckeinheit ausgeführt.

Jeweils zwei übereinander angeordnete Druckwerke 11, 13 sowie 12, 14 bilden jeweils eine Druckwerkgruppe, wobei jeder Druckwerkgruppe aus zwei übereinander positionierten Druckwerken 11, 13 und 12, 14 jeweils eine gemeinsame Schutzvorrichtung 20 zugeordnet ist. Mit der Schutzvorrichtung 20 können Gefahrenbereiche der übereinander angeordneten Druckwerke 11, 13 und 12, 14 gemeinsam abgesichert werden, in dem die jeweilige Schutzvorrichtung 20 die Gefahrenbereiche abdeckt.

Die einer Druckwerkgruppe aus übereinander angeordneten Druckwerken 11, 13 bzw. 12, 14 zugeordnete Schutzeinrichtung 20 ist dabei zumindest abschnittsweise translatorisch bzw. linear verlagerbar, um einen Zugang zu der Druckwerkgruppe entweder freizugeben oder zu versperren.

In Fig. 1 deckt die den Druckwerken 11, 13 zugeordnete Schutzvorrichtung 20 der linken Druckwerkgruppe die Zylinder 15, 16 der Druckwerke 11, 12 ab. Die den Druckwerken 12, 14 der rechten Druckwerkgruppe zugeordnete Schutzvorrichtung 20 gibt hingegen die Zylinder 15, 16 dieser Druckwerke 12, 14 frei.

Im Ausführungsbeispiel der Fig. 1 und 2 ist jede der Schutzvorrichtungen 20 aus mehreren plattenartigen Segmenten 21 zusammengesetzt, wobei gemäß Fig. 2 die Schutzvorrichtung 20 vier plattenartige Segmente 21 umfasst. Die plattenartigen Segmente sind relativ zueinander verlagerbar, und zwar senkrecht zu einer Flächennormalen der plattenartigen Segmente 21. Dabei sind gemäß Fig. 2 die plattenartigen Segmente 21 in vertikaler Richtung teleskopartig relativ zueinander verlagerbar.

Sämtliche Segmente 21 der Schutzvorrichtung 20 sind seitlich in Linearführungen 22 geführt, um die einzelnen Segmente 21 in vertikaler Richtung nach oben oder nach unten zu verlagern. In Fig. 2 sind sämtliche Segmente 21 der Schutzvorrichtung 20 ausgefahren und decken einen Gefahrenbereich an der jeweiligen Druckwerkgruppe ab. Um einen Blick auf die Zylinder der jeweiligen Druckwerkgruppe zu erleichtern, sind in die Segmente 21 Ausnehmungen 23 eingebracht.

Um den Zugang zu den Zylindern 15, 16 der jeweiligen Druckwerkgruppe freizugeben, sind die Segmente 21 der Schutzvorrichtung 20 derart relativ zueinander in vertikaler Richtung translatorisch verlagerbar, dass sämtliche Segmente 21 hintereinander positioniert sind und in Überdeckung mit einer Traverse 24 gebracht werden können, an welcher die Linearführungen 22 befestigt sind. Die Traverse 24 erstreckt sich zwischen vertikal verlaufenden Streben 25 eines Gestells der Druckeinheit 10.

Zur manuellen Betätigung der Schutzvorrichtung 20 ist einem Segment 22 der Schutzvorrichtung 20 eine Handhabungseinrichtung 26 zugeordnet. Bei der Handhabungseinrichtung 26 handelt es sich um einen Betätigungsgriff.

Dann, wenn die Schutzvorrichtung 20 den Zugang zu den Zylindern 15, 16 einer Druckwerkgruppe aus übereinander angeordneten Druckwerken freigibt, kommt die Handhabungseinrichtung 26 auf der Traverse 24 zur Anlage.

Im Ausführungsbeispiel der Fig. 1 und 2 sind sämtliche Segmente 21 der Schutzvorrichtung 20 zur Freigabe des Zugriffs auf die Zylinder 15, 16 von übereinander angeordneten Druckwerken in eine Richtung translatorisch nach unten verlagerbar. Im Unterschied hierzu ist es auch möglich, dass eine erste Gruppe von Segmenten translatorisch nach unten und eine zweite Gruppe von Segmenten translatorisch nach oben verlagerbar ist. Ebenso ist es möglich, eine Schutzvorrichtung aus translatorisch sowie teleskopartig in horizontaler Richtung verlagerbaren Segmenten bereitzustellen.

Bei der erfindungsgemäßen Druckeinheit werden demnach Gefahrenstellen zwischen Zylindern übereinander angeordneter Druckwerke einer Druckwerkgruppe mit einer gemeinsamen Schutzvorrichtung gesichert. Die Schutzvorrichtung ist zumindest abschnittsweise translatorisch verlagerbar, wobei dieselbe vorzugsweise teleskopartig zueinander verlagerbare Segmente umfasst. Den Segmenten sind vorzugsweise Mitnehmer zugeordnet, um zu gewährleisten, dass beim Zufahren bzw. Auseinanderfahren der Segmente dieselben einander mitnehmen.

Vorzugsweise ist jeder Schutzeinrichtung ein Schutzschalter zugeordnet, wobei bei jedem Öffnen der Schutzvorrichtung der Schutzschalter automatisch geöffnet wird, so dass bei geöffneter Schutzvorrichtung die entsprechenden Druckwerke der Druckeinheit nur noch in einem Tippbetrieb betrieben werden können.

### Bezugszeichenliste

- 10: Druckeinheit
- 11: Druckwerk
- 12: Druckwerk
- 13: Druckwerk
- 14: Druckwerk
- 15: Formzylinder
- 16: Übertragungszylinder
- 17: Farbwerk
- 18: Feuchtwerk
- 19: Satellitenzylinder
- 20: Schutzvorrichtung
- 21: Segment
- 22: Linearführung
- 23: Ausnehmung
- 24: Traverse
- 25: Strebe
- 26: Handhabungseinrichtung

## Patentansprüche

1. Druckeinheit einer Rollendruckmaschine, mit mehreren Druckwerken, wobei jedes Druckwerk einen Formzylinder, einen Übertragungszylinder, ein Farbwerk sowie gegebenenfalls ein Feuchtwerk umfasst, und wobei jeweils zwei vertikal übereinander angeordnete Druckwerke eine Druckwerkgruppe bilden, **dadurch gekennzeichnet, dass** jeweils zwei übereinander angeordneten Druckwerken (11, 13; 12, 14), die eine Druckwerkgruppe bilden, jeweils eine gemeinsame Schutzvorrichtung (20) zugeordnet ist, um Gefahrenbereiche an der jeweiligen Druckwerkgruppe abzudecken, wobei die einer Druckwerkgruppe zugeordnete Schutzvorrichtung (20) zumindest abschnittsweise translatorisch verlagerbar ist, um einen Zugang zu Druckwerken (11, 13; 12, 14) der Druckwerkgruppe freizugeben oder zu versperren.

2. Druckeinheit nach Anspruch 1, **dadurch gekennzeichnet, dass** die einer Druckwerkgruppe zugeordnete Schutzvorrichtung (20) mehrere plattenartige Segmente (22) aufweist, wobei die plattenartigen Segmente (22) senkrecht zur einer Flächennormalen derselben zueinander verlagerbar sind.

3. Druckeinheit nach Anspruch 2, **dadurch gekennzeichnet, dass** die Segmente (22) teleskopartig zueinander verlagerbar sind.

4. Druckeinheit nach Anspruch 2 oder 3, **dadurch gekennzeichnet, dass** die Segmente (22) in vertikaler Richtung zueinander verlagerbar sind.

5. Druckeinheit nach Anspruch 2 oder 3, **dadurch gekennzeichnet, dass** die Segmente in horizontaler Richtung zueinander verlagerbar sind.

6. Druckeinheit nach einem oder mehreren der Ansprüche 2 bis 5, **dadurch gekennzeichnet, dass** die Segmente (22) seitlich in Linearführungen (21) geführt sind, wobei die Linearführungen (21) an einem Gestell der Druckeinheit gelagert sind.
